# EUROPÄISCHE PATENTSCHRIFT

(11) **EP 1 704 929 B1**
(45) Veröffentlichungstag und Bekanntmachung des Hinweises auf die Patenterteilung: **15.07.2009**
(21) Anmeldenummer: 06004701.6
(22) Anmeldetag: 08.03.2006
(51) Int. Cl.: B06B 1/16, B65G 27/32

(54) **Schwingungsantrieb, insbesondere Exzenterantrieb für Schwingmaschinen**
Oscillating drive especially eccentric drive for vibrating machines
Entraînement oscillant notamment entraînement excentrique pour les machines vibrantes

(30) Priorität: 26.03.2005 DE 102005014014
(43) Veröffentlichungstag der Anmeldung: 27.09.2006
(73) Patentinhaber: Schenck Process GmbH, 64293 Darmstadt (DE)
(72) Erfinder: Lambart, Klaus, 64291 Darmstadt (DE)
(74) Vertreter: Behrens, Helmut

(56) Entgegenhaltungen:
- WO-A-00/05455
- CH-A5- 658 413
- DE-A1- 3 610 123
- DE-A1- 4 022 089
- US-A- 3 771 374
- US-A- 3 909 147
- US-A- 4 105 356
- US-A- 4 121 472
- US-A- 4 481 835
- US-A- 4 561 319

## Beschreibung

Die Erfindung betrifft einen Schwingungsantrieb, insbesondere Exzenterantrieb für Schwingmaschinen gemäß des Oberbegriffs des Patentanspruchs 1

Schwingförderer sind Stetigförderer, die zum Fördern oder Behandeln von Schüttgütern und Stückgütern eingesetzt werden. Ein Einsatzgebiet von Schwingmaschinen liegt dabei zum Beispiel in Gießereien, wobei Gussstücke über längere Transportwege befördert und gleichzeitig behandelt werden können. Ein weiteres Einsatzgebiet ist zum Beispiel der Ascheaustrag bei Müllverbrennungsanlagen. Hierzu besitzen die Schwingmaschinen einen Förderboden, der in Rohr- oder Rinnenform ausgebildet werden kann. Ein sogenannter Schwingungsantrieb versetzt den Förderboden in eine periodische Schwingbewegung, wodurch eine Förderbewegung des auf dem Förderboden befindlichen Gutes erzielbar ist. Je nach Art und Größe des zu fördernden bzw. zu behandelnden Gutes werden in der Praxis unterschiedliche Schwingungsantriebe eingesetzt.

Ein derartiger Schwingungsantrieb ist der sogenannte Schubkurbel- bzw. Exzenterantrieb. Dieser besteht im wesentlichen aus einer in einem Gehäuse drehbar gelagerten Exzenterwelle, wobei das Gehäuse über eine Schubstange mit dem Förderboden in Verbindung steht. Beim Einmassenschwinger ist dabei die Lagerung auf dem Fundament abgestützt, wobei beim Zweimassenschwinger die Lagerstellen auf der Gegenmasse abgestützt sind.

Die Schwingbewegung des Förderbodens wird im wesentlichen von der Schwingungszahl, der Schwingweite und dem Schwingwurfwinkel bestimmt, wobei von praktischem Interesse die Fördergeschwindigkeit und damit die Förderleistung ist. Die Fördergeschwindigkeit des zu fördernden Gutes ist beim Einsatz eines Schubkurbelantriebes unter anderem abhängig von dem fest vorgegebenen Exzenterradius der eingesetzten Exzenterwelle. Hierbei kann beim fest vorgegebenen Exzenterradius ein Antrieb nur für bestimmte zu fördernde Güter und Fördergeschwindigkeiten eingesetzt werden. Bei veränderten Einsatzbedingungen, muss hierbei der gesamte Schubkurbelantrieb ausgetauscht und/oder umgebaut werden. Dies erfordert aufwendige Montage bzw. Umrüstarbeiten, die mit hohen Kosten und langen Montagezeiten bzw. Stillstandszeiten des Schwingförderers und der damit in Verbindung stehenden Anlagenteile verbunden sind.

Aus der DE 40 22 089 A1 ist eine zentrale Rütteleinheit zur Formgebung von Betonteilen bekannt. Zur Einstellung der Rüttelkraft lässt sich die Unwucht der zentralen Rütteleinheiteit stufenlos einstellen. Dazu besteht die zentrale Rütteleinheit aus mehreren koaxialen und in axialen Abständen entlang einer Längsmittelachse angeordneten einzelnen Rütteleinheiten, die innerhalb eines zylinderförmigen Gehäuses angeordnet sind. Dabei enthält jede Rütteleinheit zwei Unwuchtkörper, die um die Längsmittelachse einer Antriebswelle relativ zueinander verstellbar sind. Einer der Unwuchtkörper ist dabei fest mit der Antriebswelle verbunden und ist als exzentrische Unwuchtmasse ausgebildet. Diese erste exzentrische Unwuchtmasse besteht aus einem Zylinderkörper, dessen Längsmittelachse exzentrisch zur Längsmittelachse der Antriebswelle verläuft. Der andere zweite Unwuchtkörper ist ebenfalls als exzentrische Unwuchtmasse ausgebildet und koaxial um den ersten festen Unwuchtkörper drehbar angeordnet und besitzt eine exzentrische innere Axialbohrung. Zur Einstellung der Rüttelkraft ist eine der den beiden Unwuchtkörpern zugeordnete Verstelleinrichtung vorgesehen, die den drehbar angeordneten Unwuchtkörper entlang einer schraubenförmigen Nut tangential verschiebt und in der gewünschten Gesamtunwuchtstellung fixiert. Derartige exzentrisch angeordnete Unwuchtmassen sind aber bei Schwingförde-einrichtungen nicht immer einsetzbar, da diese dann direkt am beweglichen Förderboden angeordnet sein müssten.

Aufgabe der vorliegenden Erfindung ist es daher einen Exzenterantrieb beziehungsweise Schubkurbelantrieb für Schwingmaschinen derart weiterzubilden, dass bei veränderten Einsatzbedingungen eine schnelle und einfache Veränderung der Schwingdaten insbesondere der Fördergeschwindigkeit des Schwingungsförderers möglich ist.

Diese Aufgabe wird durch die in Patentanspruch 1 angegebenen Erfindung gelöst. Weiterbildungen und vorteilhafte Ausführungsbeispiele der Erfindung sind in den Unteransprüchen angegeben.

Die Erfindung hat den Vorteil, dass die Position zwischen Exzenterwelle und Exzenterhülse beliebig zueinander eingestellt werden kann. Hierdurch kann der Exzenterradius in einem sehr weiten Bereich in Millimeter-Schritten verändert werden. Bei veränderten Einsatzbedingungen kann somit ohne aufwendige Umrüstarbeiten eine erforderliche Exzentrizität eingestellt werden.

Die eingestellte Position wird dann über kraft- und formschlüssige Mittel fixiert.

In einer Ausführungsform der Erfindung sind hydromechanische Fixiermittel vorgesehen, wobei ein hydraulisches Hülsenelement zum Klemmen und Lösen der Position der Exzenterwelle und der Exzenterhülse angeordnet ist. Durch entsprechende Druckbeaufschlagung eines in einem Zylindergehäuseabschnittes verschiebbar angeordneten konisch ausgebildeten Kolbens kann dabei sehr schnell ein Klemmen bzw. Lösen der Position der Exzenterwelle zur Exzenterhülse vorgenommen werden. Zwecks einfacher Einstellung und Justierung eines Exzenterradius sind am Außenumfang des das Hülsenelement umgebenden Zylindergehäuseabschnittes Markierungen vorgesehen.

In einer alternativen Ausführung der Erfindung ist das Fixiermittel derart ausgebildet, dass ein kraftschlüssiges Fixieren der Position der Exzenterwelle zu der Exzenterhülse mittels mechanischer Klemmung bewirkt wird. Hierfür ist die Exzenterhülse geschlitzt ausgeführt, wobei die Klemmung über eine Schraube einstellbar ist. Vorteilhaft bei dieser mechanischen Klemmung ist, dass der Aufbau des Fixiermittels einfach und daher in den Herstellungskosten niedrig ist. Desweiteren wird zum Lösen und Klemmen kein teures Spezialwerkzeug sowie Druckmittel in Form von synthetischen oder mineralischen Ölen benötigt.

Aufgrund des generatorischen Betriebes des Schubkurbelantriebes (Rückstöße treten auf) sind formschlüssige Verbindungen durch die auftretenden Scherkräfte minder geeignet. Bei den formschlüssigen Verbindungen können aufgrund der auftretenden Belastungen Keilverzahnungen eingesetzt werden, wobei eine Keilverzahnung hinsichlich der Herstellungskosten sehr teuer ist. Beim Einsatz eines Fixiermittels, welches ein kraftschlüssiges Klemmen bewirkt, ist ein dauerhafter störungsfreier Betrieb der Schwingmaschine möglich.

Die Erfindung wird anhand eines Ausführungsbeispiels, das in den Zeichnungen dargestellt ist, näher beschrieben.

Es zeigt:
- Fig. 1:: eine schematische Darstellung einer Schwingmaschine,
- Fig. 2:: eine vergrößerte Darstellung der Einbausituation des Schwingungsantriebs in Seitenansicht,
- Fig. 3:: eine Schnittdarstellung der Exzenterwelle mit Exzenterhülse samt Lagerstellen,
- Fig. 4:: einen Querschnitt durch die Exzenterwelle mit Exzenterhülse längs der Linie IV-IV in Fig. 3,
- Fig. 5:: eine weitere Ausführungsform der Exzenterwelle mit Exzenterhülse in Schnittdarstellung,
- Fig. 6:: einen Querschnitt durch die Exzenterwelle mit Exzenterhülse längs der Linie B - B in Fig. 5.

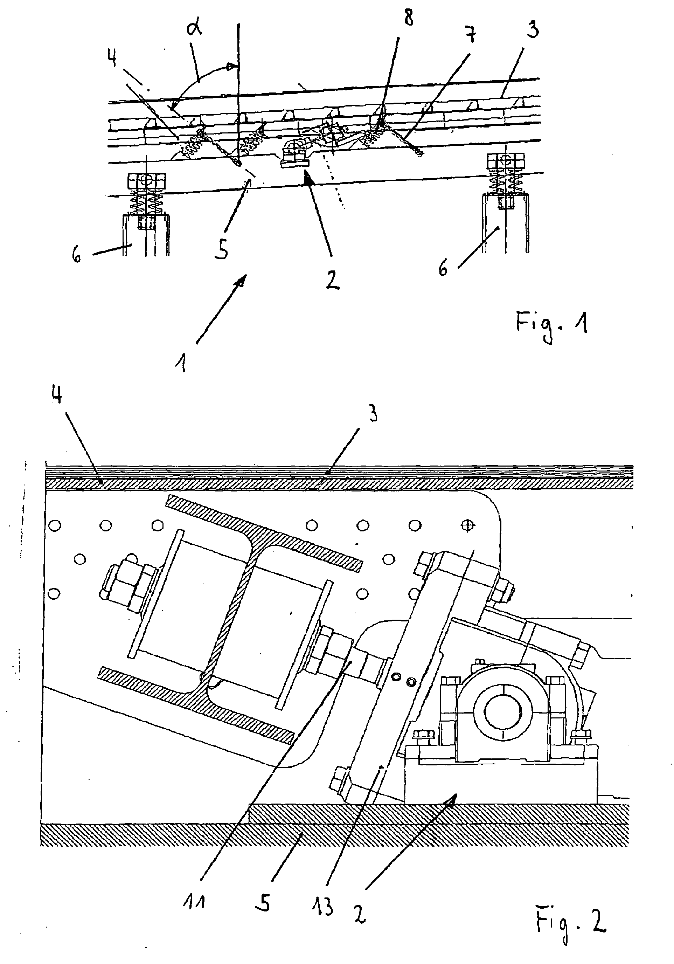

In Fig. 1 ist in schematischer Darstellung eine Schwingmaschine 1 mit dem erfindungsgemäßen Schwingungsantrieb 2 dargestellt. Die Schwingmaschine 1 ist als Schwingförderer zum Fördern von Stückgut zum Beispiel Gussstücke ausgebildet. Es sind jedoch auch beliebig andere Einsatzgebiete möglich. Der Schwingförderer 1 kann dabei auch als Schwingsieb ausgebildet sein. Der Schwingförderer 1 besitzt einen Förderboden 3, der in einem Schwingrahmen 4 angeordnet ist. Der Schwingrahmen 4 ist zwecks Ausführung einer Schwingbewegung mit einer parallel zum Schwingrahmen 4 angeordneten Gegenschwingmasse 5 gekoppelt, wobei die Gegenschwingmasse elastisch auf einem Fundament 6 abgestützt ist. Eine Vielzahl von Lenkerelementen 7 verbindet den Schwingrahmen 4 mit der Gegenschwingmasse 5, dabei sind die Lenkerelemente 7 in Bezug auf die Vertikale unter einem Winkel α und parallel zueinander angeordnet. Des weiteren sind Federelemente 8 zwischen dem Schwingrahmen 4 und der Gegenschwingmasse 5 angeordnet, die einen rechten Winkel mit den Lenkerelementen 7 bilden. Derartige Schwingnaschinen sind dem Fachmann bekannt, so dass auf eine nähere Erläuterung an dieser Stelle verzichtet wird.

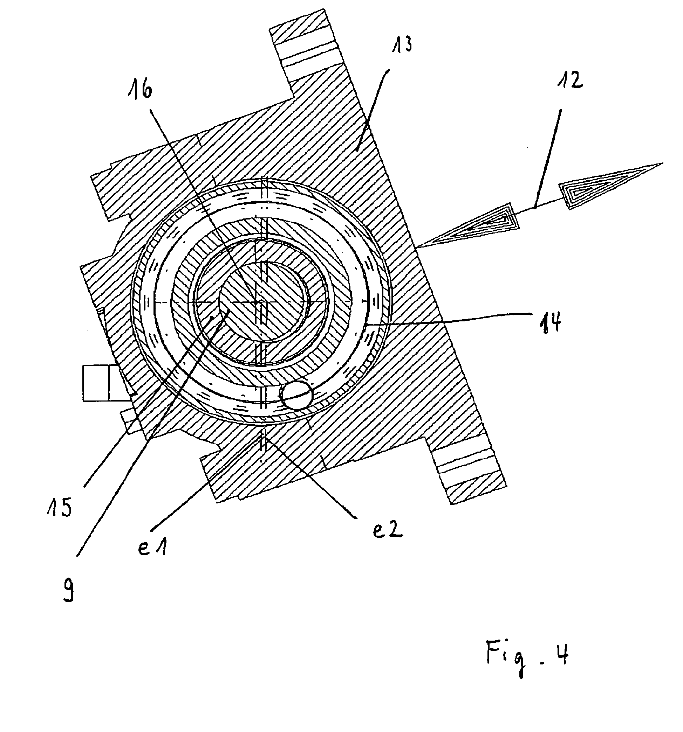

Der erfindungsgemäße Schwingungsantrieb 2 ist als Schubkurbelantrieb ausgebildet. Nähere Einzelheiten zu dem erfindungsgemäßen Exzenterantrieb / Schwingungsantrieb 2 sind den Zeichnungen Fig. 2 bis Fig. 6 sowie den nachfolgenden Erläuterungen zu entnehmen. Dieser besteht im wesentlichen aus einer in einem Gehäuse gelagerten Exzenterwelle 9, wobei die endseitig angeordneten Lagerstellen 10 auf der Gegenschwingmasse 5 abgestützt sind. Bei einer Ausführung als Einmassenschwinger sind die Lagerstellen 10 auf dem Fundament 6 abgestützt. Der Schubkurbelantrieb bzw. Schwingungsantrieb 2 überträgt eine Schwingförderbewegung über eine Schubstange 11 auf den Schwingrahmen 4. Die übertragene Schwingförderbewegung ist durch den Doppelpfeil 12 in Fig. 4 dargestellt. Dazu ist die Schubstange 11 an ein die Exzenterwelle umgebendes Gehäuseelement 13 eines Antriebslagers 14 gekoppelt.

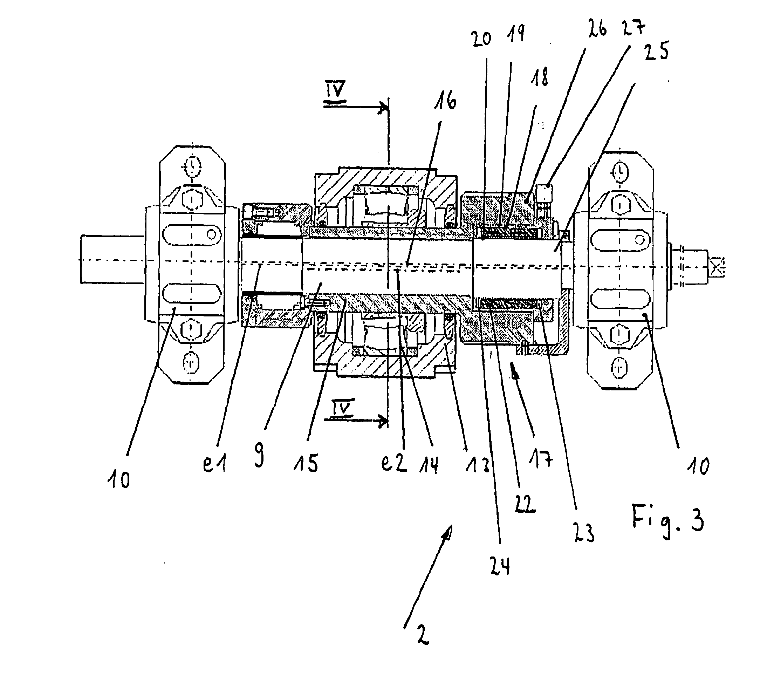

Aus der Schnittdarstellung der Fig. 3 ist zu ersehen, dass im Bereich des Antriebslagers 14, welches in dem Ausführungsbeispiel als Pendelrollenlager ausgebildet ist, zwischen Antriebslager 14 und Exzenterwelle 9 eine exzentrisch ausgebildete Hülse angeordnet ist. Die Exzenterwelle 9 ist dabei verdrehbar um die Längsachse 16 in der Exzenterhülse 15 aufgenommen, wobei der exzentrische Abschnitt der Exzenterwelle 9 und der Exzenterhülse 15 radial übereinanderliegend angeordnet sind. Die Exzentrizität der Exzenterwelle 9 ist in den Fig. 3 und Fig. 4 durch die strichpunktierte Linie e1, die Exzentrizität der Exzenterhülse 15 ist durch die strichpunktierte Linie e2 dargestellt.

Die Position zwischen Exzenterwelle 9 und Exzenterhülse 15 ist gesichert. Es ist deshalb notwendig ein entsprechendes Fixiermittel 17 vorzusehen. Dieses Fixiermittel 17 kann dabei derart ausgebildet sein, dass es eine formschlüssige und kraftschlüssige Fixierung bewirkt. In dem in den Figuren 3 und 4 dargestellten Ausführungsbeispiel ist ein hydromechanisches Fixiermittel 17 gezeigt. Dieses hydromechanische Fixiermittel 17 besteht aus einem doppelwandig ausgebildeten Hülsenelement wobei zwischen äußerem Ringelement 19 und innerem Ringelement 20 eine geschlossene ringförmige Kammer 21 gebildet wird. Die Kammer 21 wird durch einen ringförmig ausgebildeten Kolben 22 in zwei Druckmittelkammern 23/24 unterteilt, die mit Druckmittel gefüllt sind und mit einer entsprechenden Zu- /Abflussleitung in Verbindung stehen. Eine Besonderheit des Kolbens 22 besteht darin, dass der Kolben 22 in Bezug auf seine äußere Mantelfläche konisch sich erweiternd ausgebildet ist. Die innere Mantelfläche des äußeren Ringelementes 19 des Hülsenelementes 18 ist entsprechend dem Konus des Kolbens 22 angepasst ausgebildet. Das Hülsenelement 18 ist auf einem dem Exzenterabschnitt der Exzenterwelle 9 benachbarten zylindrischen Wellenabschnitt 25 angeordnet. Das Hülsenelement 18 ist dabei an dem äußeren radialen Mantelabschnitz des äußeren Ringelementes 19 in einem radial sich erweiternden Zylindergehäuseabschnitt 26, der sich an dem exzentrisch ausgebildeten Abschnitt der Exzenterhülse anschließt. An einem Endbereich des Hülsenelementes 18, der aus dem Zylindergehäuseabschnitt 26 herausragt sind Hydraulikanschlüsse 27 angeordnet, die eine entsprechende Druckbeaufschlagung der Druckmittelkammern 23/24 rechts/links und somit eine Verschiebung des Kolbens 22 nach rechts bzw. links bewirken. Durch eine Druckbeaufschlagung der rechten Druckmittelkammer 23 wird somit ein Verschieben des Kolbens 22 nach links erzielt, wodurch ein kraftschlüssiges Verspannen der Exzenterhülse 15 mit der Exzenterwelle 9 erreicht wird. Diese kraftschlüssige Kopplung wird durch Druckbeaufschlagung der linken Druckmittelkammer 24 aufgehoben, da dadurch der Kolben 22 nach rechts geschoben wird und die Verspannung gelöst wird.

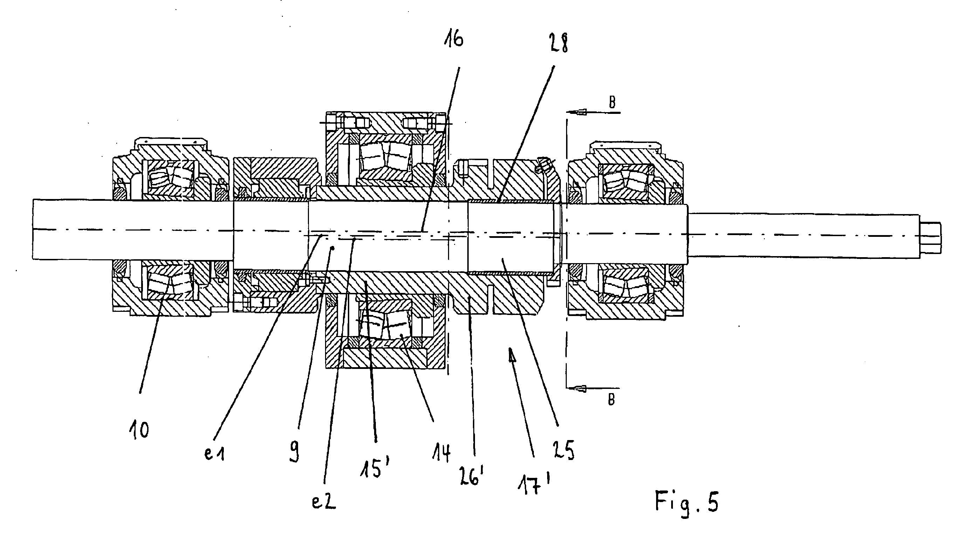

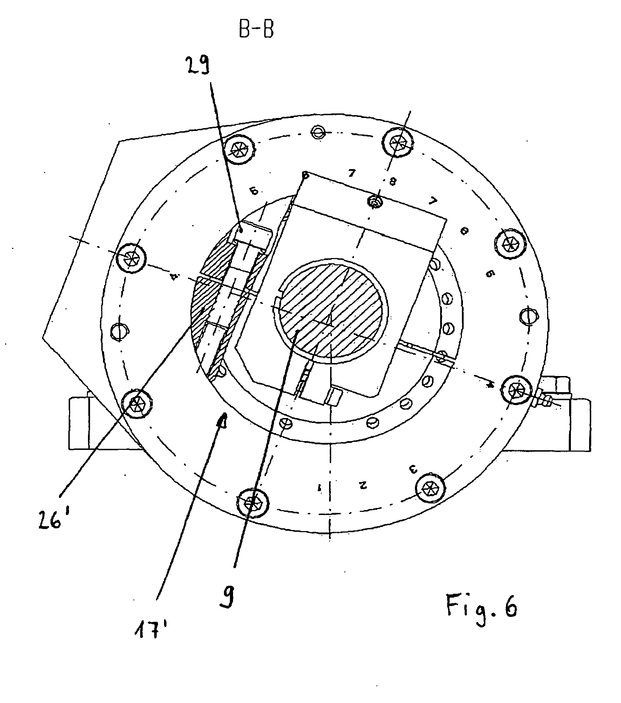

In den Figuren 5 und 6 ist ein weiteres Ausführungsbeispiel eines Fixiermittels 17' dargestellt und nachfolgend näher erläutert. Gleiche bereits zuvor beschriebene Teile sind in den Figuren 5 und 6 mit denselben Bezugszeichen versehen und werden an dieser Stelle nicht erläutert. Im Unterschied zu dem in den Figuren 3 und 4 dargestellten hydromechanischen Fixiermittel 17 ist in dem weiteren Ausführungsbeispiel ein mechanisches Fixiermittel 17' angeordnet. Dieses mechanische Fixiermittel 17' bewirkt eine kraftschlüssige Fixierung und besteht im wesentlichen aus einer Exzenterhülse 15' mit geschlitzt ausgeführtem radial sich erweiternden Zylindergehäuseabschnitt 26'.

Wie zu den Figuren 3 und 4 beschrieben, ist die Exzenterhülse 15' zwischen Antriebslager 14 und Exzenterwelle 9 angeordnet. Die Exzenterwelle 9 ist dabei verdrehbar um die Längsachse 16 in der Exzenterhülse 15' aufgenommen, wobei der exzentrische Abschnitt der Exzenterwelle und der Exzenterhülse 15' radial übereinander liegend angeordnet sind. Die Position zwischen Exzenterwelle 9 und Exzenterhülse 15' ist gesichert. Dies wird durch das mechanische Fixiermittel 17' bewirkt. Um die Fixierung der Position zwischen Exzenterwelle und Exzenterhülse zu erzielen, ist dabei die Exzenterhülse 15' in einem weiteren Abschnitt radial sich erweiternd als Zylindergehäuseabschnitt 26' ausgebildet. Dieser schließt sich an dem exzentrisch ausgebildeten Abschnitt der Exzenterhülse an. Der Zylindergehäuseabschnitt 26' ist, wie es aus der Fig. 6 zu ersehen ist, quer geschlitzt ausgeführt, wobei Klemmschrauben vorgesehen sind, die ein kraftschlüssiges Klemmen zwischen Exzenterhülse und Exzenterwelle im Bereich des Zylindergehäuseabschnittes bewirken. Zwischen Zylindergehäuseabschnitt 26' und dem zylindrischen Wellenabschnitt 25 ist eine Hülse 28 aus Lagermetall eingefügt, wodurch ein Fressen an dieser Stelle verhindert werden soll. Diese Gleitbuchse aus Lagermetall ist auf den zylindrischen Wellenabschnitt 25 aufgeschrumpft. Als Lagermetall wird beispielsweise Bronze verwendet. Anstelle des Einsatzes einer Hülse 28 aus Lagermetall könnten an dieser Stelle auch entsprechende Beschichtungen auf dem zylindrischen Wellenabschnitt 25 bzw. der inneren Mantelfläche des Zylindergehäuseabschnittes 26' vorgesehen werden.

Wenn die kraftschlüssige Kopplung aufgehoben ist, kann die Position zwischen Exzenterwelle 9 und Exzenterhülse 15,15' durch einfaches Verdrehen der beiden Bauteile zueinander verändert werden.

Hierdurch kann der Exzenterradius von O bis zu einem Maximalwert eingestellt werden. In dem dargestellten Ausführungsbeispiel ist die Einstellung einer Exzentrizität von 0 - 8 mm möglich.

Um eine einfache Einstellbarkeit für den Bediener zu erhalten, sind an der äußeren Mantelfläche des Zylindergehäuseabschnittes Markierungen bzw. eine Skalierung vorgesehen.

Zur einfachen und bedienerfreundlichen Verdrehung der Exzenterhülse 15,15' zur Exzenterwelle 9 sind an dem mit der Exzenterhülse 15,15' in Verbindung stehenden radial sich erweiternden Zylindergehäuseabschnitt 26,26' Nuten für einen normierten Hakenschlüssel und an einem Endbereich der Exzenterwelle 9 ein Vierkant angebracht.

## Patentansprüche

1. Schwingungsantrieb für Schwingmaschinen (1), umfassend eine drehbar antreibbare Exzenterwelle (9), die mindestens einen exzentrischen Abschnitt aufweist sowie eine den exzentrischen Abschnitt umgebende Exzenterhülse (15, 15'), die am Außenumfang mindestens einen exzentrischen Abschnitt aufweist und wobei die Exzentrizität des Schwingungsantriebes (2) durch Verdrehen der Position der Exzenterwelle (9) zu der Exzenterhülse (15) einstellbar ist und die eingestellte Position durch Fixiermittel (17, 17') arretierbar ist, **dadurch gekennzeichnet, dass** der Schwingungsantrieb (2) als Schubkurbelantrieb ausgebildet ist, bei dem die Exzenterwelle (9) in einem die Exzenterwelle (9) umgebendes Gehäuseelement (13) eines Antriebslagers (14) angeordnet ist, wobei das Gehäuseelement (13) mit einer die Antriebskraft auf einem Schwingförderer übertragbaren Schubstange (11) verbunden ist, wobei die Fixiermittel (17,17') entweder durch ein Zylindergehäuseabschnitt (26') gebildet sind, das aus einem sich axial über das Gehäuseelement (13) erstreckenden radial erweiterten Abschnitt der Exzenterhülse (15') besteht, der entlang eines Wellenabschnitts (25) der Exzenterwelle (9) einen Querschlitz aufweist, in dem Klemmschrauben vorgesehen sind, durch die die Exzenterhülse (15') fest mit der Exzenterwelle (9) kraftschlüssig verbindbar ist, oder als ein hydromechanisch betätigbares doppelwandiges Hülsenelement (18) ausgebildet sind, wobei zwischen äußerem Ringelement (19) und innerem Ringelement (20) des Hülsenelements (18) eine geschlossene ringförmige Kammer (21) gebildet wird, und mittels entsprechender Druckbeaufschlagung ein in der Kammer des Hülsenelementes (18) gelagerter konisch ausgebildeter ringförmiger Kolben (22) verschiebbar ist, wobei die innere Mantelfläche des äußeren Ringelements (19) des Hülsenelements (18) entsprechend dem Konus des Kolbens (22) angepasst ausgebildet ist.

2. Schwingungsantrieb für Schwingmaschinen nach Anspruch 1, **dadurch gekennzeichnet, dass** das Hülsenelement (18) in einem Zylindergehäuseabschnitt (26) gelagert ist und der Zylindergehäuseabschnitt (26) an seiner äußeren Mantelfläche mit Markierungen versehen ist.

3. Schwingungsantrieb für Schwingmaschinen nach Anspruch 1 bis 2, **dadurch**_**gekennzeichnet**, dass Exzenterhülse (15') und Zylindergehäuseabschnitt (26') einteilig ausgebildet sind.

## Claims

1. Vibration drive for vibrating machines (1), including an eccentric shaft (9) drivable in a rotating way which has at least one eccentric section as well as an eccentric bushing (15, 15') surrounding the eccentric section, which at the external circumference has at least one eccentric section, the eccentricity of the vibration drive (2) being settable by turning the position of the eccentric shaft (9) with regard to the eccentric bushing (15) and the set position being lockable by fixing means (17, 17'), **characterized in that** the vibration drive (2) is designed as slider crank mechanism where the eccentric shaft (9) is arranged in a casing element (13) of a drive bearing (14) surrounding the eccentric shaft (9), the casing element (13) being connected with a push rod (11) that transmits the drive force to a vibrating conveyor and the fixing means (17, 17') being formed either by a cylinder housing section (26') which is composed of a radially extending section of the eccentric bushing (15') reaching axially over the casing element (13), a section which shows a transversal slot along a shaft section (25) of the eccentric shaft (9) in which clamping screws are provided that allow for a force-locked connection of the eccentric bushing (15') and the eccentric shaft (9), or designed as a double-walled bushing element (18) which can be actuated hydromechanically, a closed annular chamber (21) being formed between the external ring element (19) and the internal ring element (20) of the bushing element (18) which can be shifted by means of corresponding pressure application of an annual, conically designed piston (22) mounted in the chamber of the bushing element (18), the internal surface area design of the external ring element (19) of the bushing element (18) being adapted to the piston cone (22).

2. Vibration drive for vibrating machines as per claim 1 **characterized in that** the bushing element (18) is mounted in a cylinder housing section (26) and that the cylinder housing section (26) has marks on its outer surface area.

3. Vibration drive for vibrating machines as per claim 1 to 2 **characterized in that** the eccentric bushing (15') and the cylinder housing section (26') are designed as one piece.

## Revendications

1. Entraînement oscillant pour machines vibrantes (1), comprenant un arbre pouvant être entraîné à rotation (9), qui présente au moins une section excentrique ainsi qu'un manchon d'excentrique (15, 15') enveloppant la section excentrique, qui présente sur sa périphérie au moins une partie excentrique et dans lequel l'excentricité de l'entraînement oscillant (2) peut être réglée par rotation de la position de l'arbre à excentrique (9) par rapport au manchon d'excentrique (15) et la position réglée peut être fixée par des moyens de blocage (17, 17'), **caractérisé en ce que** l'entraînement oscillant (2) est constitué par un mécanisme à bielle et manivelle dans lequel l'arbre d'excentrique (9) est logé dans un élément de bague extérieure (13) d'un palier (14) entourant l'arbre d'excentrique (9), l'élément de bague extérieure (13) étant relié à une bielle (11) transmettant la force d'entraînement à un convoyeur à secousses, les moyens de blocage (17, 17') étant constitués soit par une section de boîtier cylindrique (26') consistant en une section radialement élargie du manchon d'excentrique (15') s'étendant axialement sur l'élément de bague extérieure (13), qui présente, le long d'une section (25) de l'arbre d'excentrique (9), une fente transversale dans laquelle sont prévues des vis de blocage par lesquelles le manchon d'excentrique (15')peut être fixé en force sur l'arbre d'excentrique (9), soit par un élément de manchon (18) à double paroi, actionnable hydro mécaniquement, une chambre annulaire fermée (21) étant formée entre l'élément annulaire externe (19) et l'élément annulaire interne (19) de l'élément de manchon (18) et **en ce qu'**avec l'application d'une pression correspondante, un piston annulaire de forme conique, disposé dans la chambre de l'élément de manchon (18), peut être déplacé, la surface d'enveloppe de l'élément annulaire externe (19) de l'élément de manchon (18) étant adapté par sa forme au cône du piston (22).

2. Entraînement oscillant pour machines vibrantes selon la revendication 1, **caractérisé en ce que** l'élément de manchon (18) est logé dans une section de boîtier cylindrique (26) et que la section de boîtier cylindrique (26) est pourvue de marque sur sa surface enveloppe.

3. Entraînement oscillant pour machines vibrantes selon la revendication 1 ou 2, **caractérisé en ce que** le manchon d'excentrique (15') et la section de boîtier cylindrique (26') sont formés d'une seule pièce.
